# EUROPÄISCHE PATENTSCHRIFT

(11) **EP 1 420 470 B1**
(45) Veröffentlichungstag und Bekanntmachung des Hinweises auf die Patenterteilung: **12.07.2006**
(21) Anmeldenummer: 03405308.2
(22) Anmeldetag: 01.05.2003
(51) Int. Cl.: H01M 4/86, H01M 8/12

(54) **Verfahren zum Präparieren einer Beschichtungspaste**
Process for the preparation of a coating paste
Procédé de préparation d'une pâte de revêtement

(30) Priorität: 30.05.2002 EP 02405433
(43) Veröffentlichungstag der Anmeldung: 19.05.2004
(73) Patentinhaber: Sulzer Hexis AG, 8400 Winterthur (CH)
(72) Erfinder: Batawi, Emad Dr., 8400 Winterthur (CH); Voisard, Cyril Dr., 2902 Fontenais (CH)
(74) Vertreter: Sulzer Management AG

(56) Entgegenhaltungen:
- EP-A- 1 081 778
- US-A- 4 590 090
- US-A1- 2001 034 296
- DATABASE WPI Section Ch, Week 200229 Derwent Publications Ltd., London, GB; Class L03, AN 2002-227718 XP002273551 & CN 1 328 351 A (UNIV XIANXING SCI TECHNOLOGY IND CO LTD) 26. Dezember 2001 (2001-12-26)
- PATENT ABSTRACTS OF JAPAN Bd. 1998, Nr. 08, 30. Juni 1998 (1998-06-30) & JP 10 079250 A (TORAY IND INC), 24. März 1998 (1998-03-24)

## Beschreibung

Die Erfindung betrifft ein Verfahren zum Präparieren einer Beschichtungspaste (engl. "ink") gemäss Oberbegriff von Anspruch 1, welche Beschichtungspaste zu einem Herstellen einer Funktionalschicht einer Elektrode für Brennstoffzellen, verwendbar ist die bei mittleren oder hohen Temperaturen betreibbar ist. Die Erfindung bezieht sich auch auf eine derartige Beschichtungspaste, auf eine Verwendung dieser Beschichtungspaste sowie auf eine Hochtemperatur-Brennstoffzelle.

In einer Hochtemperatur-Brennstoffzelle (SOFC-Brennstoffzelle) reagieren einerseits oxidierende und andererseits reduzierende Gase auf elektrochemisch aktiven Elementen unter Erzeugung von elektrischer und thermischer Energie. Bei planaren Brennstoffzellen sind die elektrochemisch aktiven Elemente folienartig ausgebildet und umfassen jeweils folgende Funktionalschichten: Zwei Elektrodenschichten, die Anode sowie die Katode, auf denen elektrochemische Elektrodenreaktionen zwischen den genannten Gasen und katalytisch wirkenden Stoffen der Elektroden stattfinden, und eine die Elektrodenschichten trennende Festelektrolytschicht, die eine Schicht aus einem ionenleitenden Feststoffelektrolyten ist. In einfacheren Ausführungsformen des elektrochemisch aktiven Elements bildet die Festelektrolytschicht eine Trägerstruktur für die Elektrodenschichten. Eine Herstellung solcher Elektrodenschichten ist beispielsweise in der EP-A 0 902 493 (= P.6829) beschrieben.

Aus der DE-A- 19 819 453 ist eine Hochtemperatur-Brennstoffzelle bekannt, in der ein Anodensubstrat eine Trägerstruktur bildet. Auf dieser Trägerstruktur sind eine Anodenzwischenschicht, eine vorzugsweise sehr dünne Festelektrolytschicht und die schichtförmige Katode aufgebracht. Das Anodensubstrat und die Anodenzwischenschicht sind Funktionalschichten, die aus dem gleichen Elektrodenmaterial hergestellt werden, nämlich aus einem porösen Cermet, das aus dem keramischem Material YSZ (Yttrium stabilisiertes Zirkoniumoxid) und Nickel besteht.

Für die Festelektrolytschicht (Trägerstruktur oder durch Beschichtung aufgebrachte Schicht) wird auch YSZ verwendet. In einer Zone an der Grenzfläche zwischen Anode und Elektrolyt finden an sogenannten Drei-Phasenpunkten (Nickel / Elektrolyt / Pore) die elektrochemischen Reaktionen statt, bei denen Nickelatome durch Sauerstoffionen (O²⁻) des Elektrolyten oxidiert und diese durch einen gasförmigen Brennstoff (H₂, CO) wieder reduziert werden, wobei H₂O und CO₂ gebildet und die bei der Oxidation freigesetzten Elektronen vom Anodensubstrat weiter geleitet werden. Das Nickeloxid, mit dem die genannten Redoxprozesse des wechselnden Reduzierens und Oxidierens stattfinden, wird als "aktives Oxid" bezeichnet.

Die Kathode ist auch eine Funktionalschicht, in der zwei Feststoffphasen zusammen mit einem Porenraum Drei-Phasenpunkte bilden. Sauerstoffmoleküle aus dem Porenraum reagieren unter Aufnahme von Elektronen zu Sauerstoffionen, die von der einen der Feststoffphasen zur Festelektrolytschicht weiter geleitet werden. Die Elektronen werden aus einem Interkonnektor, der die elektrochemisch aktiven Elemente benachbarter Brennstoffzellen verbindet, der Kathode zugeführt.

Die genannten Funktionalschichten lassen sich mit einem pastenförmigen Beschichtungsmaterial herstellen, das mittels Siebdruckverfahren auf ein Substrat, beispielsweise auf die Festelektrolytschicht, aufgebracht wird. Nach einem Trocknungsschritt wird das Beschichtungsmaterial durch Brennen auf das Substrat aufgesintert.

Damit sich auf den Elektroden ein grosser Umsatz der Elektrodenreaktionen ergibt, müssen diese Funktionalschichten eine grosse Dichte an Drei-Phasenpunkten aufweisen. Um eine grosse Dichte zu erhalten, müssen die beiden Feststoffphasen in Form sehr feiner Partikel zusammengefügt werden. Es ist möglich, mittels chemischer Verfahren solche Partikel herzustellen. Allerdings zeigt sich, dass beim Herstellen einer Beschichtungspaste diese Partikel sich nicht homogen vermischen lassen. Aufgrund von Kohäsionskräften bilden sich homogene Anhäufungen, die jeweils aus einer grossen Anzahl von Partikeln der gleichen Feststoffphase bestehen. Nur an den Grenzen zwischen den Anhäufungen ergeben sich die erforderlichen Drei-Phasenpunkte.

Aufgabe der Erfindung ist es, ein Verfahren zum Präparieren einer Beschichtungspaste ("ink") zu schaffen, die aus feinen Partikeln zweier Feststoffphasen hergestellt wird und in der die beiden Feststoffphasen eine wesentlich grösser Anzahl von Kontaktstellen bilden als bei der genannten Beschichtungspaste mit den homogenen Anhäufungen. Diese Aufgabe wird durch das im Anspruch 1 definierte Verfahren gelöst.

Das Verfahren ist ein Präparieren einer Beschichtungspaste, die zu einem Herstellen einer Funktionalschicht einer Elektrode für Brennstoffzellen verwendbar ist. Die Beschichtungspaste enthält dispers verteilte, zwei Feststoffphasen bildende Partikel. In der hergestellten Funktionalschicht sind auf einer Gas/Feststoff-Grenzfläche durch eine kombinierte Wirkung der beiden Feststoffphasen und mit gasförmigen Reaktanden katalytische Reaktionen aktivierbar. In einem ersten Schritt werden die Feststoffphasen als feinkörnige Partikel ausgebildet. Die Partikel beider Feststoffphasen werden vermischt sowie homogen verteilt in einer ersten Flüssigkeit dispergiert. Aus der dabei entstandenen Dispersion werden heterogene Konglomerate der feinkörnigen Partikel gebildet. Diese Konglomerate werden nach einem Sintern durch Zugabe einer zweiten Flüssigkeit sowie unter einer Zerkleinerung zu einer homogenen Paste vermengt. Die im ersten Schritt ausgebildeten Partikel sind so feinkörnig, dass die heterogenen Konglomerate und deren Bruchstücke nach der Zerkleinerung jeweils eine Vielzahl von Partikeln beider Feststoffphasen enthalten.

Das erfindungsgemässe Verfahren ist aus einem weiteren Grund vorteilhaft. Die feinkörnigen Partikel des ersten Verfahrensschritts ergeben wegen einer sehr grossen spezifischen Oberfläche eine Beschichtungspaste, deren Feststoffanteil relativ klein ist. Die auf die Elektrolytschicht aufgetragene Beschichtungspaste ergibt eine sehr poröse Schicht, in der sich beim Sintern aufgrund von Schrumpfeffekten Spannungen ausbilden. Diese Spannungen können so gross sein, dass es zum Abplatzen der Beschichtung von der Elektrolytschicht kommt. Bei der aus den heterogenen Konglomeraten bzw. deren Bruchstücken gebildeten Beschichtungspaste ist der Feststoffanteil wesentlich grösser und die Schrumpfeffekte entsprechend kleiner. Die aufgesinterte Beschichtung haftet daher gut auf der Elektrolytschicht.

Das erfindungsgemässe Verfahren lässt sich auch auf das Präparieren von Beschichtungspasten anwenden, die für andere Funktionalschichten als die Elektrodenschichten vorgesehen sind.

Die abhängigen Ansprüche 2 bis 6 betreffen vorteilhafte Ausführungsformen des erfindungsgemässen Verfahrens. Eine Beschichtungspaste und eine Verwendung dieser Beschichtungspaste sind jeweils Gegenstand der Ansprüche 7 bzw. 8. Die Ansprüche 9 und 10 beziehen sich auf Hochtemperatur-Brennstoffzellen, deren Elektroden mit der genannten Beschichtungspaste hergestellt sind.

Nachfolgend wird die Erfindung anhand der Zeichnungen erläutert. Es zeigen:
- Fig. 1: Blockschema zum erfindungsgemässen Verfahren,
- Fig. 2: Zwischenprodukt des Verfahrens, das durch Sprühtrocknen gewonnen worden ist,
- Fig. 3: Konglomerat mit zwei Feststoffphasen und
- Fig. 4: Schnitt durch eine poröse, zwei Feststoffphasen enthaltende Funktionalschicht.

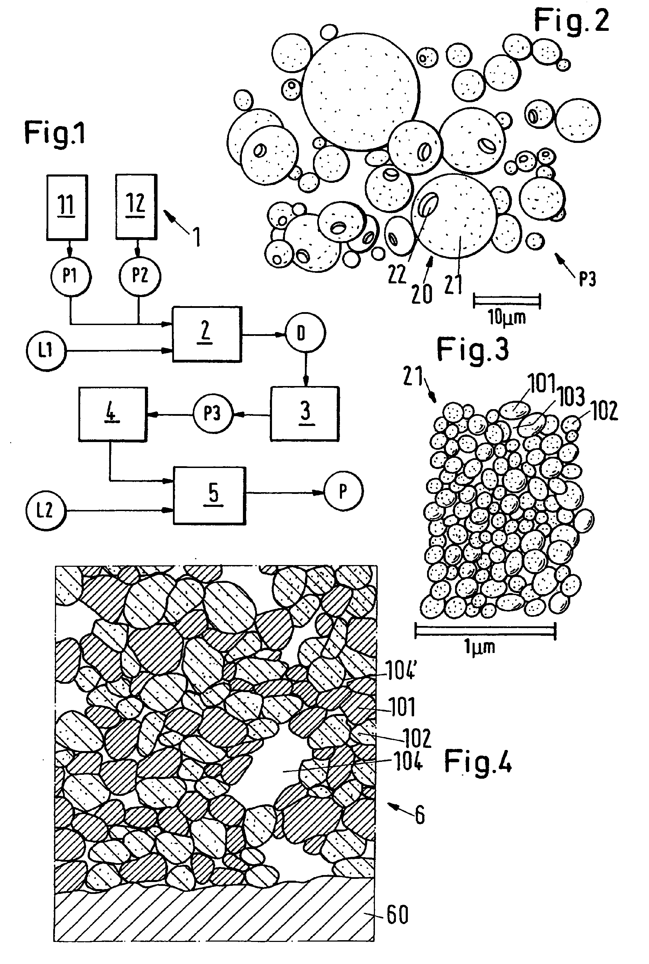

In Fig. 1 ist zum erfindungsgemässen Verfahren ein Blockschema gezeigt: In einem ersten Schritt 1 werden in Reaktoren 11 und 12 mittels chemischer Verfahren feinkörnige Partikel P1 und P2 erzeugt, die eine hohe spezifische Oberfläche (σ) von rund 20 - 60 m²/g aufweisen. Diese Partikel P1, P2 sind als zwei Feststoffphasen für eine Funktionalschicht vorgesehen, in der auf einer Gas/Feststoff-Grenzfläche durch eine kombinierte Wirkung der beiden Feststoffphasen und mit gasförmigen Reaktanden katalytische Reaktionen durchführbar sind. Die Funktionalschicht wird aus einer erfindungsgemäss präparierten Beschichtungspaste hergestellt, welche die dispers verteilten Partikel P1, P2 enthält. Diese Beschichtungspaste ist insbesondere zum Herstellen einer Elektrode für Hochtemperatur-Brennstoffzellen verwendbar.

Die im ersten Schritt 1 gebildeten feinkörnigen Partikel P1, P2 der beiden Feststoffphasen werden in einer ersten Flüssigkeit L1 dispergiert, wobei in diesem zweiten Schritt 2 die Partikel P1, P2 so vermischt werden, dass eine Dispersion D mit einer homogenen Verteilung der Partikel P1, P2 entsteht. Vorteilhafterweise wird der zweite Schritt 2 mittels einer Kugelmühle durchgeführt. Die Dispersion D wird - dritter Schritt 3 - in einem versprühten Zustand getrocknet. Beispielsweise wird dazu die Dispersion D in ein erhitztes Inertgas eingesprüht. Ein für dieses Sprühtrocknen benötigter Wärmeeintrag kann auch mittels Wärmestrahlung und/oder Mikrowellen erfolgen.

Die feinkörnigen Partikel P1, P2 können auch aus grobkörnigen Partikeln durch Mahlen gewonnen werden. In diesem Fall können in der Kugelmühle des zweiten Schritts 2 die Verkleinerung der Partikel und deren Dispergierung kombiniert vorgenommen werden. Die Schritte 1 und 2 sind somit in einem gemeinsamen ersten Schritt zusammengefasst.

In Fig. 2 ist das durch Sprühtrocknen gewonnene Zwischenprodukt P3 des Verfahrens abgebildet: Es besteht zumindest teilweise aus hohlen Kügelchen 20, deren Oberflächen 21 jeweils einen in den Innenraum führenden Durchbruch 22 aufweisen. Eine vergrösserte Darstellung der Oberfläche 21 ist in Fig. 3 gezeigt (rund zwanzigfache Vergrösserung). Es ist ein Konglomerat von Partikeln 101 (= P1) und 102 (= P2) zu sehen, welche die beiden Feststoffphasen bilden. Zwischen diesen Partikeln 101, 102 befinden sich Mikroporen 103.

Heterogenen Konglomerate P3 können auch mittels anderer Verfahrensschritte erzeugt werden. Beispielsweise durch Zumischen eines geeigneten Flockungsmittels zur Dispersion D ballen sich die feinkörnigen Partikel P1 und P2 zu Verbänden zusammen, in denen die beiden Partikelsorten vermischt angeordnet sind. Mit einem anschliessenden Entfernen der ersten Flüssigkeit L1, insbesondere durch Trocknen, ergeben sich aus den Partikelverbänden die heterogenen Konglomerate. Als Flockungsmittel kann beispielsweise eine Base verwendet werden, mit der der pH-Wert erhöht wird. Auch organische Stoffe wie beispielsweise Alkohole sind verwendbar. Die Partikelverbände sedimentieren und können in einem Dekanter von einem Teil der ersten Flüssigkeit L1 getrennt werden. Das Sediment kann in einem Fliessbett getrocknet werden.

Im Zwischenprodukt P3, das aus den heterogenen Konglomeraten der feinkörnigen Partikel P1 und P2 besteht, sind diese Partikel P1, P2 homogen verteilt, ohne Ausbildung homogener Anhäufungen gleicher Feststoffphasen. Die getrockneten Konglomerate werden in einem vierten Schritt 4 gebrannt, so dass im Beispiel des Sprühtrocknens die Partikel P1, P2 in den Kügelchen 20 durch eine Sinterung miteinander verbunden sind.

Diese Konglomerate werden nach dem Sintern in einem fünften Schritt 5 durch Zugabe einer zweiten Flüssigkeit L2 sowie unter einer Zerkleinerung zu einer homogenen Paste P vermengt. Dank der Zerkleinerung ergibt sich ein grösserer Feststoffanteil und folglich eine geringere Porosität der schliesslich herstellbaren Funktionalschicht. Das Endprodukt P enthält die heterogenen Konglomerate als Bruchstücke oder in unzerkleinerter Form. Die im ersten Schritt ausgebildeten Partikel sind so feinkörnig, dass nach der Zerkleinerung die Bruchstücke der heterogenen Konglomerate jeweils eine Vielzahl von Partikeln P1, P2 beider Feststoffphasen enthalten. Die spezifische Oberfläche (σ) der Partikel von P beträgt rund 3 - 10 m²/g.

Die sprühgetrockneten und gesinterten Konglomerate können in einer Kugelmühle zerkleinert werden. Verglichen mit den Kugeln einer ersten Mühle, die für den zweiten Verfahrensschritt 2 zum Einsatz kommt, werden beim Weiterverarbeiten in der zweiten Mühle wesentlich grössere Kugeln verwendet. So entstehen aus den Konglomeraten Bruchstücke, die wesentlich grösser als die feinkörnigen Partikel P1, P2 sind, aus denen in der ersten Mühle eine gut gemischte Dispersion präpariert worden ist.

Durch Siebdrucken der erfindungsgemässen Paste auf ein Substrat 60, siehe Fig. 4, und durch anschliessendes Trocknen sowie Sintern erhält man eine Funktionalschicht 6, die als Querschnitt ausschnittsweise in Fig. 4 dargestellt ist. Diese Schicht 6 besteht aus den feinkörnigen Partikeln 101 und 102, welche die beiden Feststoffphasen bilden, und aus Makroporen 104 sowie Mikroporen 104', die einen kommunizierenden Porenraum bilden. Die meisten der Mikroporen 104' haben bereits als Mikroporen 103 in den Konglomeraten bestanden. Die Makroporen 104 ergeben sich zwischen den Konglomeraten bzw. deren Bruchstücken. Die Existenz der Makroporen 104 ist günstig, da sie eine rasche Grobverteilung der gasförmigen Reaktanden ermöglichen.

Die für katalytische Reaktionen benötigten Drei-Phasenpunkte befinden sich auf der Grenzfläche zwischen dem Porenraum und den festen Bestandteilen, und zwar dort, wo die Partikel 101, 102 der beiden Feststoffphasen in Kontakt stehen.

Das Substrat 60 ist beispielsweise eine mechanisch widerstandsfähige Folie, deren widerstandsfähige Komponente eine Lage aus Feststoffelektrolyt ist. Die widerstandsfähige Komponente der Folie kann auch eine poröse Trägerstruktur aus Anodenmaterial sein.

Für die Herstellung der Anode einer Hochtemperatur-Brennstoffzelle ist als erste Feststoffphase ein "aktives Oxid" vorgesehen, das folgende chemische Zusammensetzung aufweist:
Ni₁₋ₓ MₓO, mit x = 0 - 0.05 und M = Cu, V, Mg, Pt, Co, Fe, Mo, W;
für die zweite Feststoffphase, welche die Funktion eines Leiters von Sauerstoffionen und Elektronen hat, sind Stoffklassen mit folgenden chemischen Zusammensetzungen vorgesehen:
a) YₓM'_{y}Zr_{1-x-y}O₂, mit x = 0 - 0.1 und y = 0 - 0.1 und M' = Ti, Mn, Al, Nb oder
b) Ce_{1-x-y}M"ₓM"'_{y}O₂, mit x = 0 - 0.4 und y = 0 - 0.05 und M" = Gd, Sm, Y und M"' = Co, Fe, Mn.
Die beiden Feststoffphasen werden in Anteilen zusammengefügt, deren Verhältnis (aktives Oxid bezüglich zweiter Feststoffphase) in Gewichtsprozenten in einem Bereich von 50 : 50 bis 70 : 30 liegt.

Für die Herstellung der Katode einer Hochtemperatur-Brennstoffzelle ist als erste Feststoffphase eine Stoffklasse vorgesehen, die durch folgende chemische Zusammensetzung definiert ist:
La_{1-x-y}M*ₓMn_{1-z}M**₂O₃, mit x = 0.1 - 0.3; y = 0 - 0.05 und z = 0 - 0.5 und M* = Sr, Ca und M** = Co, Fe;
für die zweite Feststoffphase sind die gleichen Stoffklassen und der gleiche Anteil wie im Beispiel der Anode vorgesehen.

Als erste Flüssigkeit L1 wird mit Vorteil Wasser verwendet, dem mindestens ein Zusatzstoff, insbesondere ein Tensid, zugemischt ist. Als zweite Flüssigkeit L2 wird ein für Siebdruckfarben übliches Stoffgemisch verwendet, das Lösungsmittel und Zusatzstoffe, beispielsweise Bindemittel, enthält.

## Patentansprüche

1. Verfahren zum Präparieren einer Beschichtungspaste (P), die zu einem Herstellen von Elektroden für Hochtemperatur-Brennstoffzellen verwendbar ist, wobei
- die Beschichtungspaste dispers verteilte, zwei Feststoffphasen bildende Partikel (101, 102) enthält,
- in der Elektrode auf einer Gas/Feststoff-Grenzfläche durch eine kombinierte Wirkung der beiden Feststoffphasen und mit gasförmigen Reaktanden katalytische Reaktionen aktivierbar sind,
- die erste Feststoffphase ein "aktives Oxid" ist, das folgende chemische Zusammensetzung aufweist:
Ni₁₋ₓ MₓO, mit x=0-0.05 und M=Cu, V, Mg, Pt, Co, Fe, Mo, W,
- oder die erste Feststoffphase eine chemische Zusammensetzung gemäss
La_{1-x-y}M*ₓMn_{1-z}M**_{z}O₃, mit x=0.1-0.3; y=0-0.05 und z=0-0.5 und M*=Sr, Ca und M**=Co, Fe, hat und
- die zweite Feststoffphase folgende chemische Zusammensetzung aufweist:
YₓM'_{y}Zr_{1-x-y}O₂, mit x=0-0.1 und y=0-0.1 und M'= Ti, Mn, Al, Nb, oder Ce_{1-x-y}M"ₓM"'_{y}O_{2,} mit x=0-0.4 and y=0-0.05 und M"=Gd, Sm, Y, und M"'=Co, Fe, Mn,
bei welchem Verfahren
- in einem ersten Schritt (1) die Feststoffphasen in zwei separaten Reaktoren (11, 12) als feinkörnige Partikel (P1, P2) ausgebildet werden,
- die Partikel beider Feststoffphasen vermischt sowie homogen verteilt (2) in einer ersten Flüssigkeit (L1) dispergiert werden,
- aus der dabei entstandenen Dispersion (D) heterogene Konglomerate (P3) der feinkörnigen Partikel gebildet werden,
- diese Konglomerate nach einem Sintern (4) durch Zugabe einer zweiten Flüssigkeit (L2) sowie unter einer Zerkleinerung (5) zu einer homogenen Paste (P) vermengt werden, wobei die im ersten Schritt ausgebildeten Partikel so feinkörnig sind, dass die heterogenen Konglomerate und deren Bruchstücke nach der Zerkleinerung jeweils eine Vielzahl von Partikeln beider Feststoffphasen enthalten.

2. Verfahren nach Anspruch 1, **dadurch gekennzeichnet, dass** die Dispersion (D) in einem versprühten Zustand getrocknet (3) wird, so dass bei diesem Sprühtrocknen die heterogenen Konglomerate (P3) entstehen, oder dass die heterogenen Konglomerate (P3) durch Zumischen eines Flockungsmittels zur Dispersion (D) und anschliessendes Trocknen der so behandelten Dispersion gebildet werden.

3. Verfahren nach Anspruch 1 oder 2, **dadurch gekennzeichnet, dass** das Verhältnis der beiden Feststoffphasen in Gewichtsprozenten in einem Bereich von 50:50 bis 70:30 liegt.

4. Verfahren nach einem der Ansprüche 1 bis 3, **dadurch gekennzeichnet, dass** bei der Wahl der erste Feststoffphase Ni₁₋ₓ MₓO für das Herstellen einer Anode und La_{1-x-y}M*ₓMn_{1-z}M**_{z}O₃ für das Herstellen einer Katode vorgesehen ist.

5. Verfahren nach einem der Ansprüche 1 bis 4, **dadurch gekennzeichnet, dass** die erste Flüssigkeit (L1) aus Wasser und mindestens einem Zusatzstoff, insbesondere einem Tensid, besteht und dass die zweite Flüssigkeit (L2) ein für Siebdruckfarben übliches Stoffgemisch ist, das Lösungsmittel und Zusatzstoffe, beispielsweise Bindemittel, umfasst.

6. Verfahren nach einem der Ansprüche 1 bis 5, **dadurch gekennzeichnet, dass** die in dem ersten Schritt (1) ausgebildeten Partikel (P1, P2) mit einer chemischen Methode hergestellt sowie in einer ersten Kugelmühle (2) dispergiert werden und dass die heterogenen Konglomerate (P3) in einer zweiten Kugelmühle (5) weiterverarbeitet werden, wobei die Kugeln der zweiten Mühle wesentlich grösser als jene der ersten Mühle sind.

7. Verfahren nach einem der Ansprüche 1 bis 6, **dadurch gekennzeichnet, dass** die präparierte Beschichtungspaste die Konsistenz einer Druckfarbe, insbesondere einer Siebdruckfarbe, aufweist.

8. Verfahren nach einem der Ansprüche 1 bis 7, **dadurch gekennzeichnet, dass** die präparierte Beschichtungspaste (P) zur Herstellung einer filmartigen Elektrode (6), insbesondere einer Anode bzw. Katode, auf einer Folie (60) verwendet wird, die insbesondere eine Schicht aus einem Feststoffelektrolyten umfasst, wobei die Paste mit einem drucktechnologischen Verfahren, insbesondere mittels einem Siebdruckverfahren, auf die Folie aufgetragen und nach einem Trocknungsschritt gesintert wird.

9. Verfahren nach einem der Ansprüche 1 bis 8, **dadurch gekennzeichnet, dass** die Anode und/oder Katode mittels einem Siebdruckverfahren auf eine mechanisch widerstandsfähige Folie aufgebracht ist, deren widerstandsfähige Komponente eine Lage aus Feststoffelektrolyt oder eine poröse Trägerstruktur aus Anodenmaterial ist.

## Claims

1. A method of preparing an ink (P) which can be used for a manufacture of electrodes for high temperature fuel cells, wherein
- the ink contains dispersedly distributed particles (101, 102) forming two solid phases;
- catalytic reactions can be activated in the electrode on a gas/ solid interface by a combined action of the two solid phases and with gaseous reactants;
- the first solid phase is an "active oxide" which has the following chemical composition:
Ni₁₋ₓMₓO, where x = 0 - 0.05 and m = Cu, V, Mg, Pt, Co, Fe, Mo, W;
- or the first solid phase has a chemical composition in accordance with
La_{1-x-y}M*ₓMn_{1-z}M**_{z}O₃, where x = 0.1 - 0.3; y = 0 - 0.05 and z = 0 - 0.5 and M* = Sr, Ca and M** = Co, Fe; and
- the second solid phase has the following chemical composition:
YₓM'_{y}Zr_{1-x-y}O₂, where x = 0 - 0.1 and y = 0 - 0.1 and M' = Ti, Mn, Al, Nb or
Ce_{1-x-y}M"ₓM'"_{y}O₂, where x = 0 - 0.4 and y = 0 - 0.05 and M" = Gd, Sm, Y and M'" = Co, Fe, Mn
in which method
- in a first step (1), the solid phases are formed in two separate reactors (11, 12) as fine grain particles (P1, P2);
- the particles of both solid phases are dispersed in a first liquid (L1) in a mixed and homogeneously distributed manner (2);
- heterogeneous conglomerates (P3) of the fine grain particles are formed from the thereby created dispersion (D);
- these conglomerates are mixed to form a homogeneous ink (P), after sintering (4), by addition of a second liquid (L2) and by comminution (5), with particles formed in the first step having such a fine grain that the heterogeneous conglomerates and their fractions each contain a plurality of particles of both solid phases after comminution.

2. A method in accordance with claim 1, **characterised in that** the dispersion (D) is dried in a sprayed state (3) such that the heterogeneous conglomerates (P3) are created with this spray drying; or **in that** the heterogeneous conglomerates (P3) are formed by mixing in a flocculating agent for dispersion (D) and by subsequent drying of the dispersion treated in this manner.

3. A method in accordance with claim 1 or claim 2, **characterised in that** the ratio of the two solid phases lies - in weight percent - in a range from 50:50 to 70:30.

4. A method in accordance with any one of the claims 1 to 3, **characterised in that**, on the selection of the first solid phase, Ni₁₋ₓMₓO is provided for the manufacture of an anode and La_{1-x-y}M*ₓMn_{1-z}M**_{z}O₃ is provided for the manufacture of a cathode.

5. A method in accordance with any one of the claims 1 to 4, **characterised in that** the first liquid (L1) consists of water and at least one additive, in particular a tenside; and **in that** the second liquid (L2) is a mixture of substances usual for screen printing colours which includes solvents and additives, for example binding agents.

6. A method in accordance with any one of the claims 1 to 5, **characterised in that** the particles (P1, P2) formed in the first step (1) are manufactured with a chemical method and are dispersed in a first ball mill (2); and **in that** the heterogeneous conglomerates (P3) are further processed in a second ball mill (5), with the balls of the second mill being substantially larger than those of the first mill.

7. A method in accordance with any one of the claims 1 to 6, **characterised in that** the prepared ink has the consistency of a printing ink, in particular of a screen printing ink.

8. A method in accordance with any one of the claims 1 to 7, **characterised in** the prepared ink (P) is used for the manufacture of a film-like electrode (6), in particular of an anode or of a cathode, on a film (60) which in particular includes a layer of a solid electrolyte, wherein the ink is applied to the film with a technological printing process, in particular by means of a screen printing process, and is sintered after a drying step.

9. A method in accordance with any one of the claims 1 to 8, **characterised in that** the anode and/or cathode is applied by means of a screen printing process onto a mechanically resistant film whose resistant component is a layer of solid electrolyte or a porous carrier structure of anode material.

## Revendications

1. Procédé de préparation d'une pâte de revêtement (P), qui est utilisable pour une fabrication d'électrodes pour des piles à combustible à haute température, dans lequel
- la pâte de revêtement contient des particules (101, 102) réparties de manière dispersée, constituant deux phases solides,
- des réactions catalytiques sont activables dans l'électrode, à une interface gaz/solide, par une action combinée des deux phases solides et avec des réactifs gazeux,
- la première phase solide est un "oxyde actif" qui présente la composition chimique suivante:
Ni₁₋ₓ MₓO, avec x = 0 à 0,05 et M = Cu, V, Mg, Pt, Co, Fe, Mo, W,
- ou la première phase solide a une composition chimique selon
La_{1-x-y}M*ₓMn_{1-z}M**_{z}O₃, avec x = 0,1 à 0, 3; y = 0 à 0,05 et z = 0 à 0,5 et M* = Sr, Ca et M**=Co, Fe et
- la deuxième phase solide présente la composition chimique suivante:
YₓM'_{y}Zr_{1-x-y}O₂, avec x = 0 à 0,1 et y = 0 à 0,1 et M' = Ti, Mn, Al, Nb ou Ce_{1-x-y}M''ₓM"'_{y}O₂, avec x = 0 à 0,4 et y = 0 à 0,05 et M'' = Gd, Sm, Y et M''' = Co, Fe, Mn,
procédé dans lequel
- dans une première étape (1), les phases solides sont formées sous la forme de particules de fine granulométrie (P1, P2) dans deux réacteurs séparés (11, 12),
- les particules des deux phases solides, mélangées et réparties de manière homogène (2), sont dispersées dans un premier liquide (L1),
- des conglomérats hétérogènes (P3) des particules à fine granulométrie sont formés à partir de la dispersion ainsi obtenue (D),
- ces conglomérats sont mélangés après un frittage (4) par addition d'un deuxième liquide (L2) ainsi que par fragmentation (5) pour donner une pâte homogène (P), où les particules formées dans la première étape sont d'une telle fine granulométrie que les conglomérats hétérogènes et leurs morceaux contiennent respectivement, après fragmentation, une multitude de particules des deux phases solides.

2. Procédé selon la revendication 1, **caractérisé en ce que** la dispersion (D) est séchée (3) dans un état pulvérisé de sorte que, lors de ce séchage par pulvérisation, les conglomérats hétérogènes (P3) soient produits ou bien que les conglomérats hétérogènes (P3) soient formés par addition d'un agent de floculation à la dispersion (D) et par séchage consécutif de la dispersion ainsi traitée.

3. Procédé selon la revendication 1 ou 2, **caractérisé en ce que** le rapport des deux phases solides en pour-cent en poids se situe dans une plage allant de 50/50 à 70/30.

4. Procédé selon l'une des revendications 1 à 3, **caractérisé en ce que**, lors de la sélection de la première phase solide, Ni₁₋ₓMₓO est prévu pour la fabrication d'une anode et La_{1-x-y}M*ₓMn_{1-z}M**_{z}O₃ est prévu pour la fabrication d'une cathode.

5. Procédé selon l'une des revendications 1 à 4, **caractérisé en ce que** le premier liquide (L1) se compose d'eau et d'au moins un additif, en particulier, d'un tensioactif, et que le deuxième liquide (L2) est un mélange de substances usuelles pour les encres pour sérigraphie, qui comprend des solvants et des additifs, par exemple des liants.

6. Procédé selon l'une des revendications 1 à 5, **caractérisé en ce que** les particules (P1, P2) formées au cours de la première étape (1) sont préparées par une méthode chimique et dispersées dans un premier broyeur à boulets (2) et **en ce que** les conglomérats hétérogènes (P3) sont retransformés dans un deuxième broyeur à boulets (5), les boulets du deuxième broyeur étant nettement plus gros que ceux du premier broyeur.

7. Procédé selon l'une des revendications 1 à 6, **caractérisé en ce que** la pâte de revêtement préparée présente la consistance d'une encre d'impression, en particulier d'une encre pour sérigraphie.

8. Procédé selon l'une des revendications 1 à 7, **caractérisé en ce que** la pâte de revêtement préparée (P) est utilisée pour la fabrication d'une électrode (6) de type film, en particulier d'une anode ou d'une cathode, sur une feuille (60), qui comprend en particulier une couche d'un électrolyte solide, où la pâte est déposée sur la feuille par un procédé de technique d'impression, en particulier au moyen d'un procédé de sérigraphie, et est frittée après une étape de séchage.

9. Procédé selon l'une des revendications 1 à 8, **caractérisé en ce que** l'anode et/ou la cathode est déposée au moyen d'un procédé de sérigraphie sur une feuille ayant une résistance mécanique, dont le composant possédant la résistance mécanique est une couche d'électrolyte solide ou une structure support poreuse constituée d'un matériau d'anode.
